Europäisches Patentamt

**European Patent Office**

Office européen des brevets

(19)

(11) Publication number: **0 067 699**

**A1**

(12) **EUROPEAN PATENT APPLICATION**

(21) Application number: **82303072.1**

(22) Date of filing: **14.06.82**

(51) Int. Cl.³: **F 28 F 9/10**

(30) Priority: **15.06.81 GB 8118318**

(43) Date of publication of application:
**22.12.82 Bulletin 82/51**

(84) Designated Contracting States:
**AT BE DE FR GB IT NL SE**

(71) Applicant: **DELANAIR LIMITED**
**New Road**
**Ammanford Dyfed South Wales,SA18 3ET(GB)**

(72) Inventor: **Butcher, William Michael**
**6 New Road**
**Llandeilo Dyfed South Wales(GB)**

(74) Representative: **Gura, Henry Alan et al,**
**MEWBURN ELLIS & CO. 2/3 Cursitor Street**
**London EC4A 1BQ(GB)**

(54) **Heat exchangers.**

(57) A heat exchanger comprises a series of parallel tubes (2) connected to a header member (4) having liquid inlet and outlet openings (6, 8) for a flow to the tubes. The tube ends project through an end plate (14) secured to the tubes a short distance from their ends. The header member is fixed to the end plate and the clamping pressure is thereby applied to resilient sealing means (24 or 26 or 34 or 50) between the tubes and the header member. Abutment means (20 or 46) between the end plate and the header member fix their spacing and determine the compression of the sealing means.

FIG 2

EP 0 067 699 A1

1.

## Heat exchangers

This invention relates to heat exchangers of the kind comprising a series of parallel tubes connecting with inlet and outlet conduits, and usually having fins or other conductive elements attached to the outer surfaces of the tubes to assist the rapid transfer of heat between a first fluid (usually a liquid) passing through the tubes and a second fluid (usually a gas) flowing around the tubes.

Such heat exchangers are commonly used in automotive vehicles, both as radiators for the engine cooling water and as heat exchangers for controlling the driving compartment temperature.

In the development of heat exchangers of this kind much attention has been given to sealing the tube connections since it is difficult to obtain a water-tight seal with a long service life without considerable manufacturing expense. The problem is particularly severe when the components to be sealed are of different materials or are of materials that cannot be joined by well-tried methods such as soldering, and some form of resilient or adhesive sealing means is required. In particular, it can be difficult to control the contact pressure of the resilient sealing means in an economical manner.

2.

In the example of GB Patent 1 482 288, gaskets for sealing the ends of a bank of tubes to a common header member or tank are held between an end plate of the header member and a counterplate through which the tubes pass, the counterplate being fixed to the tubes, e.g. by soldering in a preceding assembly stage, and the gaskets are then compressed into sealing engagement by side plates extending parallel to the tubes and connected in tension between respective header members at opposite ends of the bank of tubes.

In the example of GB Patent 1 502 816, the tubes project through a thick end plate which is faced by a sheet-form elastomeric gasket which is stretched through tube-receiving apertures in the end plate as the tubes are inserted therein and thereby form cylindrical sheaths around the end portions of the tubes. The deformed gasket material is held in its operative position only by friction and the tubes must be positively secured by soldering or the like between them and a metal counterplate behind these gaskets or by supporting such a counterplate through lateral plates running parallel to the tubes.

According to the present invention, there is provided a heat exchanger comprising a series of parallel-ended tubes projecting through apertures in one

3.

or more transverse members, and at least one header member through which the interiors of the tubes are interconnected in one or more groups, said header member being secured to at least an adjacent end one of said transverse members by means that hold the tubes in engagement with fluid-tight sealing means between the tubes and the header member to seal the connections of said tubes to the interior of said header member.

The invention is applicable to heat exchangers in which the tubes extend between opposite header members that respectively provide inlet and outlet conduit means for the tubes, and said header members are secured to respective transverse members or groups of members mounted on the tubes adjacent opposite ends of the tubes. It is also applicable to heat exchangers in which the tubes are of U-form having elongate limbs disposed parallel to each other and the opposite ends of said limbs being engaged in a common transverse member or members there being secured to the end member or group of members a common header member or respective header members providing inlet and outlet header spaces for said opposite ends of the tubes. In either instance, all the tubes can be connected in parallel or there can be two or more parallel groups of tubes connected in series by the header member or members, as by the use of internal

4.

partitions in known manner in the header member or members.

The invention can be employed in particular for heat exchangers in which a series of heat-dissipating plates are in contact with the tubes over a considerable part of the length of the tube. These heat-dissipating elements may take the form of a stack of relatively thin fin plates through which the tubes extend. Although the aforesaid transverse members having the header member or members secured to them can then comprise the endmost group or groups of fin plates, in a preferred construction there is a more rigid end plate at the or each end of the heat exchanger for securing the header member or a respective header member. Said end plate, or each of said end plates, will be located against the adjoining end of the stack of fin plates and will similarly have the tube ends projecting through it.

The end plate or plates can be secured in position by deforming the projecting ends of the tubes, e.g. by belling or swaging, so that said plate or plates will be held tightly engaged with the heat-dissipating plates.

Preferably, preformed elastomeric sealing means are interposed between the header member and the tubes to form fluid-tight seals therebetween, and spacer means between the header member and said end plate determine the extent of deformation of said sealing means by the action of said securing means.

The invention will be described in more detail by way of example with reference to the accompanying drawings, wherein:

Fig. 1 is an exploded partial view of a heat exchanger according to the invention,

Figs. 2 to 4 are detail views illustrating alternative methods of sealing between the header member and the tubes of the heat exchanger of Fig. 1,

Fig. 5 is an exploded view of another heat exchanger according to the invention, and

Fig. 6 is a detail view illustrating the method of sealing between the header member and the tubes in the heat exchanger of Fig. 5.

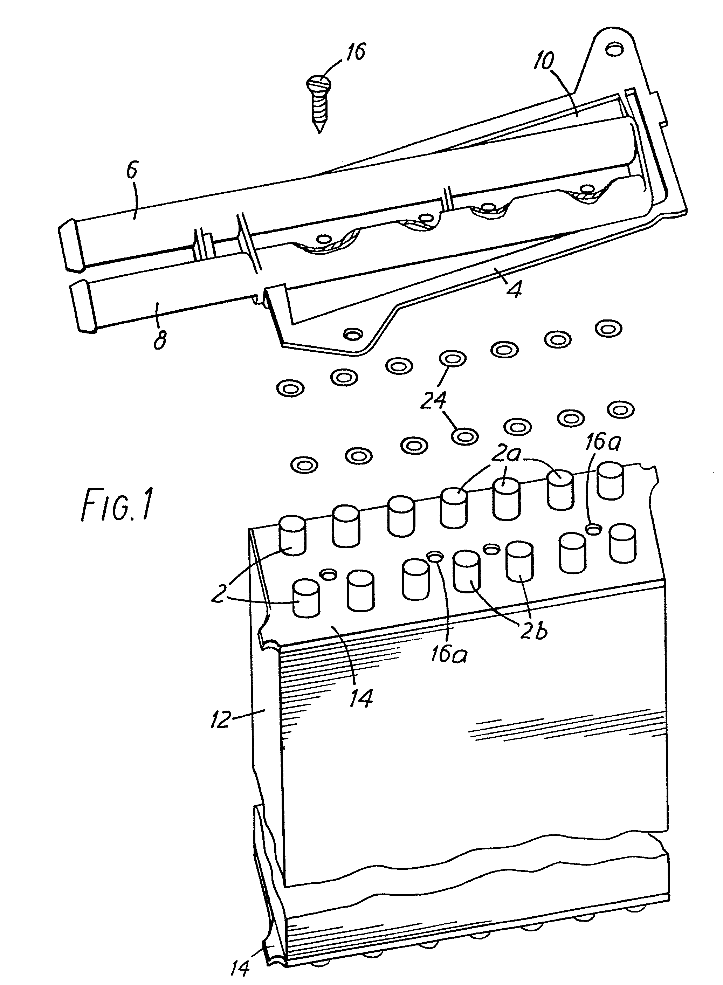

Fig. 1 illustrates a finned heat exchanger, e.g. a heat exchanger for in-airheating, comprising a bank of aluminium U-tubes 2 having elongate parallel inlet and outlet limbs 2a, 2b secured to a top tank or header member 4 moulded from glass fibre reinforced plastics. The tubes are connected in parallel between an inlet conduit 6 and an outlet conduit 8 integrally formed in the header member, projecting from a base 10 of the member. A stack 12 of thin sheet-metal fin plates that extend transversely to the parallel limbs of the tubes engage the tube outer walls to promote heat exchange between a liquid flowing through the U-tubes and a gas flow past the exterior of the heat exchanger.

The fin plates are not illustrated in detail but they are of conventional form, being corrugated or otherwise contoured so as to leave air gaps between them when they are pushed into contact with each other. They are located between rigid metal, e.g. aluminium, end plates 14. The position of the lower end plate is fixed by its engagement with the curved end regions of the U-tubes joining their parallel limbs. The upper end plates and the fins are held in position by deformation, in particular expansion, of the tubes, and in a heat exchanger with straight tubes this method of fixing can be used at both ends of the tubes.

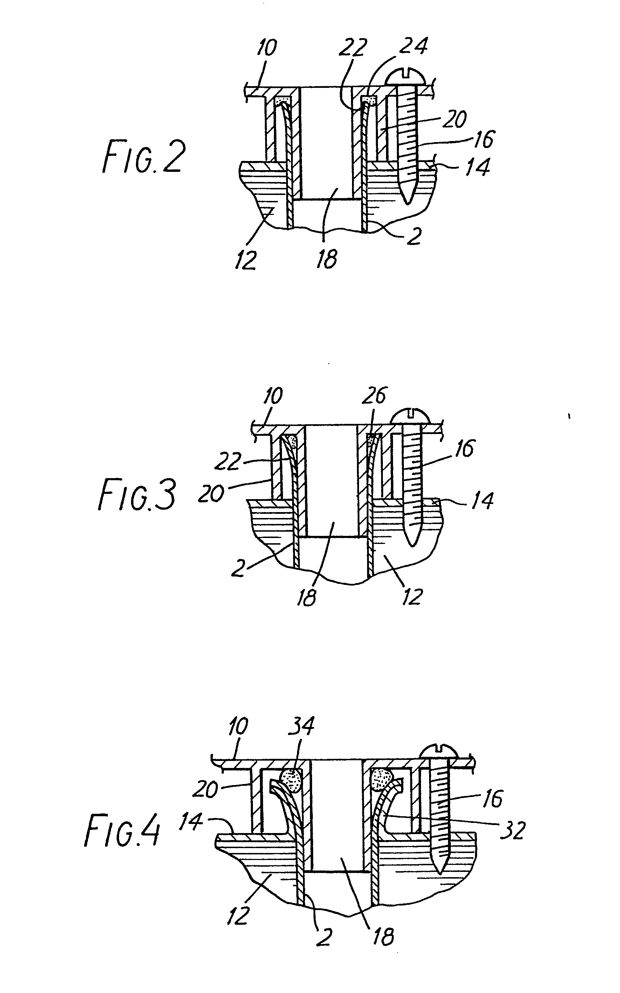

The header member is secured to the clamping top end plate by self-tapping screws 16, the heads of which seat on the base 10 of the header member externally of the inlet and outlet conduits 6,8, and the shanks of which engage in holes 16a in the adjacent end plate and penetrate into the first few fin plates adjacent the end plate. A series of tubular spigots 18 opening from the header conduits 6, 8 project downwards from the header member base to fit closely in the tubes 2, at least in the region below the top end plate, and these locate the

7.

header member transversely of the tubes, although they do not form fluid-tight seals with the tubes. Further projections from the header member base illustrated in Figs. 2 to 4 in the form of outer tubular spigots 20 coaxial with but shorter than the tube spigots 18, are held in abutment with the end plate by the screws 16 and locate the header member axially of the tubes.

In Fig. 2, the tube ends from approximately the level of the top end plate are expanded. In the region of the end plates and fin stack the deformation is slight, being sufficient only to grip the end plates and fins firmly and so locate them axially of the tubes. The extreme ends of the tubes have a more pronounced flare 22 to leave an annular clearance between them and the spigots 18 fitting the tube exteriors. Between the tube ends and the underside of the header member base are resilient sealing rings 24 that seal the tubes from the exterior, the sealing rings being deformed into firm engagement with the tube ends by the pressure applied by the screws. These sealing rings fit the annular spaces between the inner and outer spigots 18, 20. The flared ends of the tubes engage the rings intermediate their radial width and the sealing pressure is thus applied through the opposite flat faces of the rings. The locating abutment of the outer spigots 20 on the end plate 14 can ensure that the rings are uniformly and consistently compressed.

In Fig. 3 the top end plate is similarly located on the tubes but their extreme ends have a greater flare 22 than is shown in Fig. 2 to give them a maximum diameter close to the internal diameter of the outer spigots 20. O-rings 26 are engaged between the inner surfaces of the flared ends of the tubes, the underside of the base plate and the adjoining outer faces of the inner spigots 18. The flared ends of the tubes may in this case abut directly onto the underside of the header member and so determine the spacing of the header member from the end plate, or they may be arranged to be held out of contact with the header member base by the outer spigots 20. In either instance, there is a rigid locating abutment which ensures that a controlled sealing pressure is applied to the O-rings 26, independently of the pressure applied by the screws 16.

In Fig. 4, the top end plate 14 is formed with projections 32 at its apertures. These projections may take the shape of cylindrical collars or may simply be one or more tabs occupying only part of the periphery of each aperture, and they may be formed in a piercing operation producing the holes in the end plate. The tube ends are flared to a greater extent than is shown in either of Figs. 2 or 3, and the end plate projections 32 are deformed with the tube ends, so that a positive locking effect is obtained locating the end plate 14 against the pressure of the fin stack. Between the inner face of the flared end of each tube and the adjoining surfaces of the header member underside and spigots a sealing O-ring 34 is trapped in a similar manner to that shown in Fig. 3. The sealing pressure is determined by the abutment of the outer spigots of the tubular member on the end plate which set the spacing between the header member and the end plate.

Although Fig 1 illustrates a heat exchanger having U-tubes and a single header member, it will be understood that configurations having respective header members at opposite ends of the series of tubes can incorporate the invention by employing similar engagement and sealing arrangements between each header member and its adjacent tube ends.

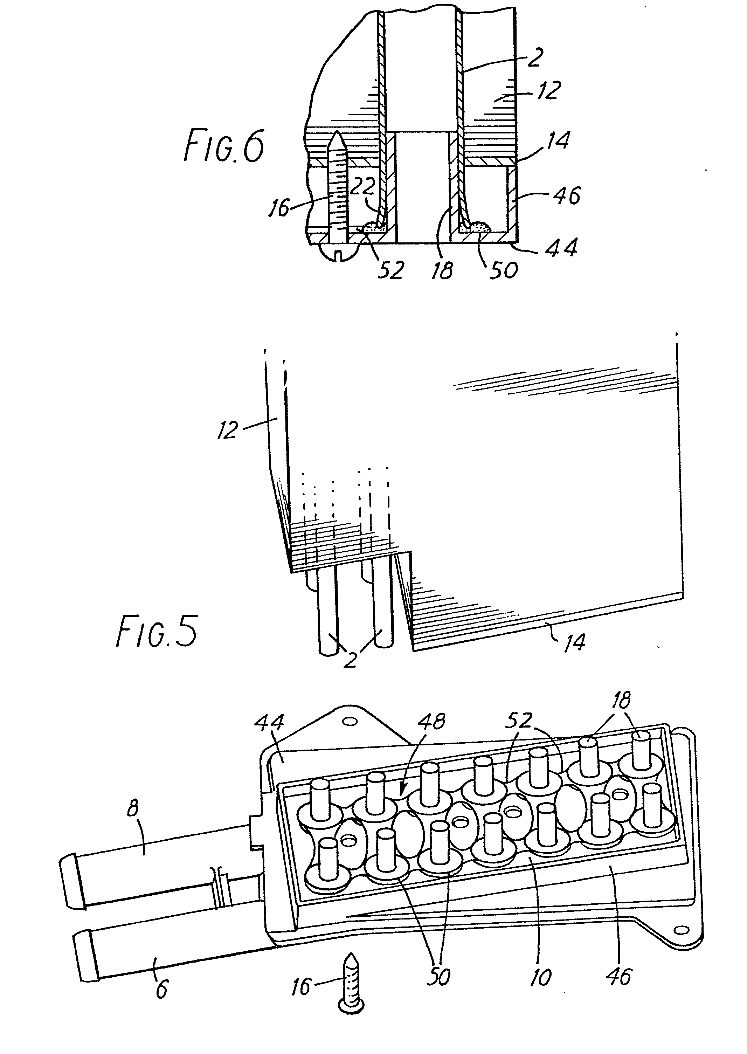

Fig. 5 is an exploded view similar to that of Fig. 1 of another form of heat exchanger according to the invention and corresponding parts are indicated by the same reference numbers. Header member 44 is shown inverted but it will be understood that either heat exchanger can generally be operated in any orientation.

The assembly of straight or U-tubes 2, fin stack 12

10.

and end plates 14 in this embodiment can be identical to that in the embodiment of Fig. 1. The header member 44 differs in a few respects from the header member 4, in particular there being no outer spigots around the spigots 18 fitting the tube interiors, but these spigots 18 function in the manner already described. In the absence of the outer spigots, the header member base is spaced from the adjacent end plate 14 by a peripheral flange 46 that bears on the outer margin of the plate as can be seen in Fig. 6. The header member in this example is cast from aluminium.

For sealing means, a unitary gasket 48 is provided that comprises a series of annular pads 50 surrounding the spigots with thinner webs 52 connecting them. The flared ends of the tubes bear on the annular pads, in a similar manner to the engagement of the sealing rings of Fig. 2. Similarly to that example, the sealing pressure is determined by the abutment of the flange 46 upon the end plate 14.

Although all the illustrated examples show the tube ends projecting through a rigid end plate superimposed on the stack of fin plates, there possibly being rigid end plates at both ends of the stack, in a simplified construction such an end plate or end plates may be omitted. The or each header member then bears against the face of the adjoining end fin plate and its securing screws are driven into the first ten or so fin plates. Also, while the drawings show screws used as securing means other fastening elements can be employed, and in particular in the case of the embodiment of Figs 5 and 6 the end plate and the header member may have a crimped connection, e.g. deformable tabs or rims being provided on one or both for crimping.

While the above-described embodiments are of in-airheating heat exchangers, the application of the invention to other heat exchangers, e.g. for the cooling radiators of water-cooled engines, will be sufficiently clear to those skilled in the art to need no further illustration.

It may be noted that the invention allows a variety of materials to be used in the construction of the heat exchanger, and also allows dissimilar materials to be used that might otherwise provide problems of assembly and secure the fluid-tight connection. While the preferred forms of sealing the tube ends are illustrated, other methods can be employed: for example when the tube ends are located in an annular space between inner and outer spigots that space may be filled with a fluid setting material, such as an adhesive, into which the tube ends are then inserted to make the seal.

CLAIMS

1.  A heat exchanger comprising a series of parallel-ended tubes (2) extending through apertures in one or more transversely extending members (12.14), and at least one header member (10) through which the interiors of the tubes are interconnected in one or more groups, characterised in that securing means (16) attach said at least one header member (10) to one or more adjacent transverse members (12,14) and said securing means hold the tubes in engagement with fluid-tight sealing means (24 or 26 or 34 or 48) between the tube ends and said at least one header member to seal the connections of said tubes to the interior of said header member.

2.  A heat exchanger according to claim 1 wherein the header member is provided with hollow spigots (18) over which the tube ends locate and the sealing means are disposed between said spigots and the tube ends.

3.  A heat exchanger according to claim 1 or claim 2 wherein the sealing means comprise at least one preformed elastomeric sealing member (24 or 26 or 34 or 48) interposed between the or each header member and the tubes, and rigid abutment means (20 or 22 or 46) engage the header member(s) to determine the extent of deformation of said at least one sealing member by the action of the securing means.

4. A heat exchanger according to claim 3 wherein spacer means (20 or 46) between at least one header member (10) and its adjacent transversely extending member (12 or 14) provide said rigid abutment means.

5. A header member according to claim 4 wherein said spacer means maintain the tube ends out of engagement with the axially opposed face of the header member.

6. A heat exchanger according to claim 3 wherein the ends of the tubes provide said rigid abutment means engaging the header member.

7. A heat exchanger according to any one of the preceding claims wherein a rigid end plate (14) forms said transversely extending member for securing the header member.

8. A heat exchanger according to claim 7 wherein the end plate is disposed between the header member (10) and a series of heat-dissipating plates (12) in contact with tubes, and said end plate bears on said series of plates to hold them in position.

9. A header member according to claim 8 wherein the tube ends projecting through the end plate are deformed to engage the end plate and retain it in engagement with said heat-dissipating plates.

10. A heat exchanger according to claim 9 wherein the end plate is provided with axial projections (32) engaged

14.

with the deformed ends of the tubes.

11. A heat exchanger according to any one of claims 1 to 6 wherein the tubes (2) extend through apertures in a stack of transversely extending heat-dissipating plates (12) in contact with the tubes and a plurality of said plates adjacent the end of the stack facing said header member (10) provide the transverse members through which the header member is attached to the tubes by said securing means (16).

12. A heat exchanger according to any one of the preceding claims wherein a common elastomeric sealing member (48) provides the sealing means between at least a plurality of the tubes and said header member.

FIG.1

0067699

0067699

FIG.2

FIG.3

FIG.4

_FIG.6_

16  22  52  18  50  2  12  14  46  44

_FIG.5_

12  2  14

44  48  52  18  8  6  16  50  10  46

European Patent
Office

**EUROPEAN SEARCH REPORT**

## DOCUMENTS CONSIDERED O BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 792 729 (PERRY) <br> * column 2, lines 49-59; column 3, lines 2-14; figure 3; column 3, line 59 - column 4, line 25; figure 7 * | 1,7 | F 28 F 9/10 |
| Y | | 3,4,8 | |
| | --- | | |
| Y | FR-A-2 377 013 (CEM) <br> * page 3, lines 13-22; figures 3,4 * | 3,4 | |
| | --- | | |
| D,Y | GB-A-1 482 288 (CHAUSSON) <br> * page 2, lines 36-41; figures 2,5 * | 8 | |
| | --- | | |
| A | FR-A-2 229 032 (PONT-A-MOUSSON) <br><br> * page 2, line 11 - page 3, line 5; page 4, lines 10-21; figures 1,5 * | 1,2,3, 7 | TECHNICAL FIELDS SEARCHED (Int. Cl. ³) <br><br> F 28 F <br> F 28 D <br> F 16 L |
| | --- | | |
| A | US-A-3 305 012 (ALLEN) <br> * column 2, lines 24-27; column 2, lines 44-48; figure 1 * | 5,7 | |
| | --- | | |
| A | FR-A-2 372 405 (JACOBE) <br> * page 1, lines 13-25; figure II-2 * | 1,3,6 | |
| | --- | | |
| | -/- | | |

The present search report has been drawn up for all claims

| Place of search | Date of completion of the search | Examiner |
|---|---|---|
| THE HAGUE | 17-09-1982 | FILTRI G. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03.82

| DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl. 3) |
|---|---|---|---|
| A | US-A-3 027 142   (ALBERS et al.)<br><br>* column  3, lines 20-26; column 3,  lines  52-57; column 4, lines 66-69; figures 4,5,7,8 *<br><br>--- | 9,10, 12 | |
| A | FR-A-2 214 875   (KUHLERFABRIK)<br>* page 4, lines 6-8; figures 2,12 *<br><br>----- | 11 | |

TECHNICAL FIELDS SEARCHED (Int. Cl. 3)

The present search report has been drawn up for all claims

| Place of search | Date of completion of the search | Examiner |
|---|---|---|
| THE HAGUE | 17-09-1982 | FILTRI G. |

EPO Form 1503. 03.82